# EUROPEAN PATENT APPLICATION

(11) **EP 4 753 189 A1**
(43) Date of publication of application: **03.06.2026**
(21) Application number: 24847934.7
(22) Date of filing: 04.07.2024
(51) Int. Cl.: H04L 1/1829

(54) **DATA PROCESSING METHOD AND APPARATUS, AND COMMUNICATION DEVICE AND COMPUTER-READABLE STORAGE MEDIUM**

(30) Priority: 31.07.2023 CN 202310962508
(71) Applicant: Sanechips Technology Co., Ltd., Shenzhen, Guangdong 518055 (CN)
(72) Inventor: GU, Yantao, Shenzhen, Guangdong 518055 (CN); JIANG, Yan, Shenzhen, Guangdong 518055 (CN)
(74) Representative: Canzler & Bergmeier Patentanwälte Partnerschaft mbB
(86) International application number: PCT/CN2024/103674
(87) International publication number: WO 2025/025974

(57) **Abstract**

Provided in the present application are a data processing method, a data processing apparatus, a communication device, and a computer-readable storage medium. The data processing method comprises: acquiring service data of currently activated k component carriers, wherein k is an integer greater than or equal to 1; forming an arrangement-period data pattern on the basis of the service data of the currently activated k component carriers, wherein the arrangement-period data pattern comprises at least some of the service data of the currently activated k component carriers; and forming a first data frame on the basis of the arrangement-period data pattern, wherein the payload of the first data frame comprises N arrangement-period data patterns, and N is an integer greater than or equal to 1.

## Description

### CROSS-REFERENCE TO RELATED APPLICATIONS

This application claims priority from Chinese patent application No. 202310962508.9 filed on July 31, 2023, the entirety of which is incorporated hereby by reference.

### TECHNICAL FIELD

Embodiments of the present application relate to the field of communication technology, and in particular relate to a data processing method, a data processing apparatus, a communication device, and a computer-readable storage medium.

### BACKGROUND

The existing radio frequency (RF) interface transmission technology mainly includes a stream transmission mode represented by JESD204 and a packet transmission mode represented by DigRF v4 from the mobile industry processor interface (MIPI) alliance. In these two transmission modes, the JESD204 interface cannot support reconfiguration of a service without a link disconnection, and to avoid the link disconnection caused by changes of the service, the interface can only be configured based on a maximum transmission bandwidth possibly occurring, resulting in serious waste of power consumption at a mobile terminal. In contrast, the DigRF v4 interface can flexibly match the transmission bandwidth with a bearer bandwidth, which can greatly save the power consumption of the mobile terminal, but has a tricky problem of a transmission delay being fixed after the link is restored or re-established upon an addition, a deletion or a reconfiguration of a service.

### SUMMARY

In a first aspect, an embodiment of the present application provides a data processing method, including: acquiring service data of k component carriers currently activated, with k being an integer greater than or equal to 1; forming a data pattern of an arrangement period based on the service data of the k component carriers currently activated, the data pattern of the arrangement period including at least part of the service data of the k component carriers currently activated; and forming a first data frame based on the data pattern of the arrangement period, a payload of the first data frame including data patterns of N arrangement periods, with N being an integer greater than or equal to 1.

In a second aspect, an embodiment of the present application provides a data processing method, including: acquiring a second data frame, the payload of the second data frame including data patterns of N arrangement periods, with N being an integer greater than or equal to 1; and demodulating the second data frame to obtain the data patterns of N arrangement periods; caching the data patterns of N arrangement periods obtained by demodulating; judging whether the number of the cached data patterns of arrangement periods is greater than or equal to a fifth preset threshold; acquiring the cached data patterns of arrangement periods in response to the number of the cached data patterns of arrangement periods being greater than or equal to the fifth preset threshold; and separating service data of all component carriers activated, from the acquired data patterns of arrangement periods.

In a third aspect, an embodiment of the present application provides a data processing apparatus, including: a data cache unit configured to acquire service data of k component carriers currently activated, with k being an integer greater than or equal to 1, and form a data pattern of an arrangement period based on the service data of the k component carriers currently activated, the data pattern of the arrangement period including at least part of the service data of the k component carriers currently activated; and a frame forming unit configured to form a first data frame based on the data pattern of the arrangement period, a payload of the first data frame including data patterns of N arrangement periods, with N being an integer greater than or equal to 1.

In a fourth aspect, an embodiment of the present application provides a data processing apparatus, including: a demodulating unit configured to acquire a second data frame, the payload of the second data frame including data patterns of N arrangement periods, with N being an integer greater than or equal to 1, and demodulate the second data frame to obtain the data patterns of N arrangement periods; and a de-jitter unit configured to cache the data patterns of N arrangement periods obtained by demodulating, judge whether the number of the cached data patterns of arrangement periods is greater than or equal to a fifth preset threshold, acquire the cached data patterns of arrangement periods in response to the number of the cached data patterns of arrangement periods being greater than or equal to the fifth preset threshold, and separate service data of all component carriers activated, from the acquired data patterns of arrangement periods.

In a fifth aspect, an embodiment of the present application provides a communication device, including: at least one of the data processing apparatus of the third aspect or the data processing apparatus of the fourth aspect.

In a sixth aspect, an embodiment of the present application provides a computer-readable storage medium having a computer program stored thereon, the computer program, when executed by a processor, causes the processor to perform the data processing method as described above.

### BRIEF DESCRIPTION OF DRAWINGS

FIG. 1 is a flowchart of a data processing method according to an embodiment of the present application.
FIG. 2 is a block diagram of a data frame according to an embodiment of the present application.
FIG. 3 is a schematic diagram showing compositions of a payload of a data frame according to an embodiment of the present application.
FIG. 4 is a flowchart of a data processing method according to an embodiment of the present application.
FIG. 5 is a block diagram of a data processing apparatus according to an embodiment of the present application.
FIG. 6 is a block diagram of a data processing apparatus according to an embodiment of the present application.

### DETAIL DESCRIPTION OF EMBODIMENTS

To improve understanding of the technical solutions of the present application for those skilled in the art, the data processing method, the data processing apparatus, the communication device, and the computer-readable storage medium according to the present application will be described below in detail in conjunction with the accompanying drawings.

Some exemplary implementations will be described more sufficiently below with reference to the accompanying drawings, but may be implemented in different forms and the present application should not be construed as limited to the implementations set forth herein. These implementations are provided so that the present application will be more thorough and complete, and will fully convey the scope of the present application to those skilled in the art.

Implementations of the present application and features thereof may be combined with each other without conflict.

As used herein, the term "and/or" includes any and all combinations of at least one associated listed item.

The terminology used herein is for the purpose of describing particular implementations only and is not intended to limit the present application. As used herein, the singular forms "a", "an" and "the" include the plural forms as well, unless the context clearly indicates otherwise. It will be further understood that as used herein, the terms "comprise/include" and/or "consist of ..." specify the presence of particular features, integers, steps, operations, elements, and/or components, but do not preclude the presence or addition of at least one another feature, integer, step, operation, element, component, and/or group thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present application, and will not be interpreted in an idealized or overly formal sense unless expressly so defined herein.

For a stream transmission mode like JESD204, once a transmission connection is established, modifying a service configuration, adding a new service connection, or deleting an existing service connection is not allowed, which poses a challenge for a terminal chip flexibly scheduling services. If a terminal uses a JESD204 interface as an RF interface between a digital baseband (DBB) chip and an RF chip, the RF interface has to be configured in a system initialization stage according to a maximum service combination possibly occurring during an entire life cycle of a current application scenario, and then a transmission connection is established between the DBB chip and the RF chip at a fixed sampling rate and a fixed transmission rate. If the service traffic is reduced due to a change of the service combination, the RF interface has to transmit/receive data at the maximum traffic by transmitting invalid data. As a result, the waste of the bearer bandwidth at the RF interface becomes more severe as the service traffic becomes lower, which is finally reflected in reduced competitiveness of the DBB chip and the RF chip in power consumption and flexibility. In addition, the JESD204 interface does not allow to transmit data and control information in a shared physical transmission lane, which requires, in addition to the RF interface, an additional matched transmission interface, such as a serial peripheral interface (SPI), for transmitting the control information, the interface may be not large in scale, but still adversely affect the area of the chip and the input/output (IO).

An advantage of a packet transmission mode such as DigRF v4 is that matching between the bearer bandwidth and the service bandwidth of the RF interface can be achieved adaptively in a power saving mode, and the transmission of data and control information in a shared lane is supported. Moreover, since all transmissions share underlayer high-speed lane resources with a large bandwidth, the usage efficiency of the physical (PHY) transmission bandwidth is greatly improved. However, there is still the tricky problem of the transmission delay being fixed after the link is restored or re-established upon an addition, a deletion or a reconfiguration of a service.

The data processing method provided in the embodiments of the present application may be applied to two chips for data transmission in a communication device. The communication device may be a terminal, a base station, or other communication devices. The chips may include a DBB chip, an RF chip, an RF front end (RFFE) chip, a power management integrated circuit (PMIC) chip, and the like.

The DBB chip is mainly configured to achieve protocol stacks of modems in various wireless systems and processing on baseband signals in a physical layer.

The RF chip is mainly configured to achieve functions of filtering and amplifying wireless signals, distributing antenna data, controlling a radio frequency switch, and the like.

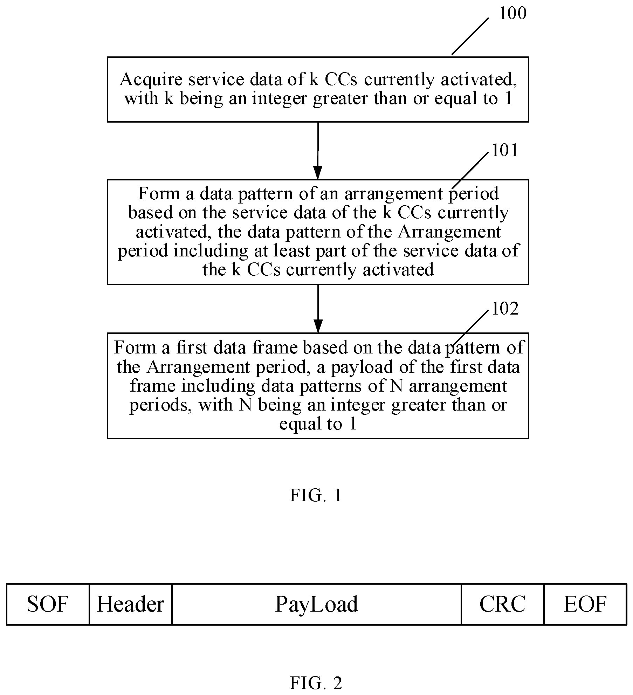

FIG. 1 is a flowchart of a data processing method according to an embodiment of the present application.

In a first aspect, referring to FIG. 1, an embodiment of the present application provides a data processing method which may be executed by a first interface module in a first chip of a communication device, the first chip may be any chip for data transmission in the communication device, such as any chip mentioned above.

The data processing method may include following operations 100 to 102.

At operation 100, acquiring service data of k component carriers (CCs) currently activated, with k being an integer greater than or equal to 1.

In some implementations, acquiring service data of the k CCs currently activated includes: receiving service data of all CCs; caching service data of the k CCs currently activated in the service data of all the CCs; and acquiring the service data of the k CCs currently activated, from the cached service data.

In some implementations, in response to the first chip being a DBB chip, the service data of all CCs may be received from a modem in the first chip.

At operation 101, forming a data pattern of an arrangement period based on the service data of the k CCs currently activated, the data pattern of the arrangement period includes at least part of the service data of the k CCs currently activated.

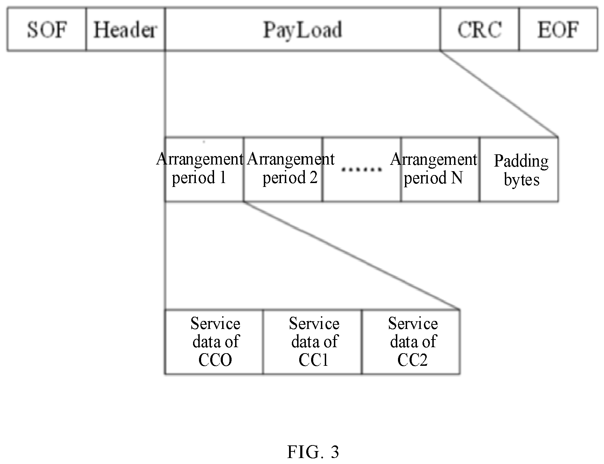

In some implementations, at least part of the service data of the k CCs currently activated is proportionally interleaved in the data pattern of the arrangement period. As shown in FIG. 3, at least part of the service data of three CCs currently activated, i.e., service data of CC0, CC1 and CC2, is proportionally interleaved in the data pattern of one arrangement period.

In some implementations, a ratio of amounts of service data of the k CCs included in the data pattern of the arrangement period is determined based on throughputs of air interfaces of the k CCs.

In some implementations, in response to any CC transmitting through B antennas, the throughput of the air interface of the CC is B times of a service sampling rate of the CC, B is an integer greater than or equal to 1.

In some implementations, a ratio of amounts of service data of the k CCs included in the data pattern of the arrangement period is a ratio of throughputs of air interfaces of the k CCs.

For example, three CCs are currently activated, service data of a first CC (i.e., CC0) is transmitted through two antennas with a service sampling rate of 122.88 megahertz (MHz), service data of a second CC (i.e., CC1) is transmitted through four antennas with a service sampling rate of 30.72MHz, and service data of a third CC (i.e., CC2) is transmitted through four antennas with a service sampling rate of 15.36MHz. The throughput of the air interface of CC0 is 2×122.88, the throughput of the air interface of CC1 is 4×30.72, the throughput of the air interface of CC2 is 4×15.36, and D_CC0:D_CC1:D_CC2=4:2:1, with D_CC0 being the throughput of the air interface of CC0, D_CC1 being the throughput of the air interface of CC1, and D_CC2 being the throughput of the air interface of CC2.

In this case, 4 bytes of service data of CC0, 2 bytes of service data of CC1, and 1 byte of service data of CC2 may be included in the data pattern of one arrangement period; or 8 bytes of service data of CC0, 4 bytes of service data of CC1, and 2 bytes of service data of CC2 may be included in the data pattern of one arrangement period. The rest may be deduced from above, as long as the ratio of amounts of service data of the k CCs included in the data pattern of the arrangement period is the ratio of throughputs of air interfaces of the k CCs.

At operation 102, forming a first data frame based on the data pattern of the arrangement period, a payload of the first data frame including data patterns of N arrangement periods, with N being an integer greater than or equal to 1.

In some implementations, as shown in FIG. 2, the first data frame includes a start of frame (SOF), a header (Header), a payload (PayLoad), a cyclic redundancy check (CRC), and an end of frame (EOF).

In some implementations, SOF represents a start position of a frame.

In some implementations, Header identifies characteristics of a current frame.

In some implementations, CRC is a CRC bit generated from Header and PayLoad.

In some implementations, EOF represents an end position of a frame.

In some implementations, the payload of the first data frame further includes A padding bytes, with A being an integer greater than or equal to 0.

In some implementations, as shown in FIG. 3, in response to the data patterns of the N arrangement periods being not enough to fill the payload of the first data frame, A padding bytes may be added to the payload of the first data frame to complete framing.

In some implementations, after forming the first data frame based on the data pattern of the arrangement period (i.e., operation 102), the data processing method further includes: mapping the first data frame to M lanes activated, with M being an integer greater than or equal to 1; performing high-speed serial communication encoding on the data mapped to each activated lane; and performing bit width conversion on the data subjected to the high-speed serial communication encoding on each activated lane, and performing first physical layer processing on the data subjected to the bit width conversion on each activated lane.

In some implementations, a mode for mapping the first data frame to the M lanes activated, and a mode for performing high-speed serial communication encoding on the data mapped to each activated lane may refer to those in MIPI DigRF v4 interface specification.

In some implementations, the encoding may include, for example, 8B/10B encoding, or 64B/66B encoding, or 128B/132B encoding, or the like.

In some implementations, the bit width conversion refers to a process of converting a bit width of the data subjected to the high-speed serial communication encoding into a bit width for subsequent processing.

In some implementations, the first physical layer processing includes processes such as parallel-to-serial conversion, transmit filtering, and de-emphasis.

In some implementations, after forming the first data frame based on the data pattern of the arrangement period (i.e., operation 102), and before mapping the first data frame to the M lanes activated, the data processing method further includes: caching the first data frame; judging whether a number of cached first data frames is less than or equal to a first preset threshold; and in response to the number of cached first data frames being less than or equal to the first preset threshold, stopping mapping the first data frame to the M lanes activated.

After performing bit width conversion on encoded data, and before performing first physical layer processing on the data subjected to the bit width conversion, the data processing method further includes: caching the data subjected to the bit width conversion on each activated lane; judging whether the data, subjected to the bit width conversion, cached on each activated lane is null; and in response to the number of cached first data frames being less than or equal to the first preset threshold, and the data, subjected to the bit width conversion, cached on all activated lanes being null, stopping performing first physical layer processing on the data subjected to the bit width conversion on each activated lane, and controlling to enter a power saving mode.

In some implementations, in response to the number of cached first data frames being greater than the first preset threshold, no processing is to be performed, and data processing in the original flow, i.e., mapping the first data frame to the M lanes activated and subsequent data processing operations, is to be continued.

In some implementations, in response to the data, subjected to the bit width conversion, cached on at least one activated lane being not null, no processing is to be performed, and data processing in the original flow, i.e., performing first physical layer processing on the data subjected to the bit width conversion on each activated lane, is to be continued.

In some implementations, after stopping mapping the first data frame to the M lanes activated, the data processing method further includes: judging whether the number of cached first data frames is greater than a second preset threshold; in response to the number of cached first data frames being greater than the second preset threshold, continuing to map the first data frames to the M lanes activated; and controlling to exit the power saving mode.

In some implementations, in response to the number of cached first data frames being less than or equal to the second preset threshold, no processing is to be performed, and data processing in the original flow, i.e., stopping mapping the first data frame to the M lanes activated and controlling to maintain the power saving mode, is to be continued.

In some implementations, after performing bit width conversion on the data after subjected to the high-speed serial communication encoding on each activated lane, and before performing first physical layer processing on the data subjected to the bit width conversion on each activated lane, the data processing method further includes: caching the data subjected to the bit width conversion on each activated lane; judging whether an amount of data, subjected to the bit width conversion, cached on each activated lane is greater than a third preset threshold; and in response to the amount of data, subjected to the bit width conversion, cached on each of all activated lanes being larger than the third preset threshold, stopping forming the first data frame based on the data pattern of the arrangement period.

In some implementations, in response to the amount of data, subjected to the bit width conversion, cached on at least one activated lane being less than or equal to the third preset threshold, no processing is to be performed, and data processing in the original flow, i.e., forming a first data frame based on the data pattern of the arrangement period and subsequent data processing operations, is to be continued.

In some implementations, after stopping forming the first data frame based on the data pattern of the arrangement period, the data processing method further includes: judging whether an amount of data, subjected to the bit width conversion, cached on each activated lane is less than a fourth preset threshold; and in response to the amount of data, subjected to the bit width conversion, cached on each of all activated lanes being less than the fourth preset threshold, continuing to form the first data frame based on the data pattern of the arrangement period.

In some implementations, in response to the amount of data, subjected to the bit width conversion, cached on at least one activated lane being greater than or equal to the fourth preset threshold, no processing is to be performed, and data processing in the original flow, i.e., stopping forming the first data frame based on the data pattern of the arrangement period and subsequent data processing operations, is to be continued.

According to the data processing method provided in the embodiment of the present application, at least part of service data of all component carriers currently activated is included in the data pattern of one arrangement period, and then the first data frame is formed based on the data pattern of the arrangement period, so that a delay jitter is limited within one arrangement period in a case of reconfiguration, addition or deletion of a service, which enables a transmission delay to be controllable and predictable, thereby effectively improving the quality and reliability of service transmission.

In some implementations, the number of cached first data frames is monitored, and in response to the number of cached first data frames being relatively small, mapping the first data frame to the M lanes activated is stopped, and in response to the amount of cached data subjected to the bit width conversion being null, the power saving mode is entered to save power consumption.

In some implementations, the amount of cached data subjected to the bit width conversion is monitored, and in response to the amount of cached data subjected to the bit width conversion being relatively large, processes of framing, mapping, encoding and the like are stopped, thereby simplifying the clock problem.

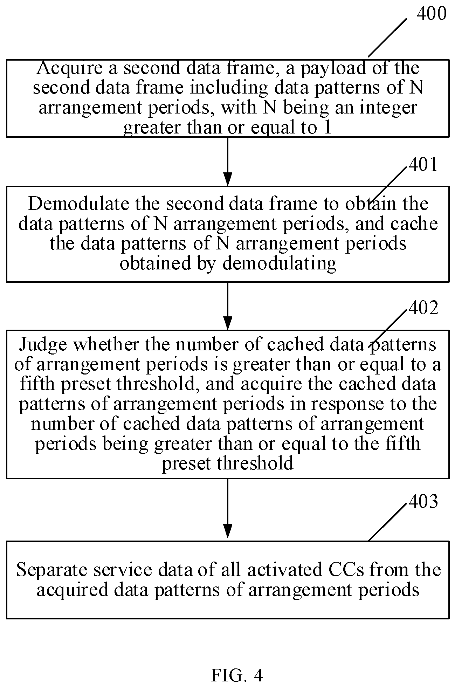

FIG. 4 is a flowchart of a data processing method according to an embodiment of the present application.

In a second aspect, referring to FIG. 4, an embodiment of the present application provides a data processing method which may be executed by a second interface module in a second chip of a communication device, and the second chip may be any chip for data transmission, such as any chip mentioned above.

The data processing method may include following operations 400 to 403.

At operation 400, acquiring a second data frame, a payload of the second data frame including data patterns of N arrangement periods, with N being an integer greater than or equal to 1.

In some implementations, the data pattern of the arrangement period includes at least part of service data of k CCs currently activated.

In some implementations, a ratio of amounts of service data of the k component carriers included in the data pattern of the arrangement period is determined based on throughputs of air interfaces of the k component carriers.

In some implementations, in response to any CC transmitting through B antennas, the throughput of the air interface of the CC is B times of a service sampling rate of the CC, with B being an integer greater than or equal to 1.

In some implementations, the ratio of amounts of service data of the k component carriers included in the data pattern of the arrangement period is a ratio of throughputs of air interfaces of the k component carriers.

For example, three CCs are currently activated, service data of a first CC (i.e., CC0) is transmitted through two antennas with a service sampling rate of 122.88 megahertz (MHz), service data of a second CC (i.e., CC1) is transmitted through four antennas with a service sampling rate of 30.72MHz, and service data of a third CC (i.e., CC2) is transmitted through four antennas with a service sampling rate of 15.36MHz. The throughput of the air interface of CC0 is 2×122.88, the throughput of the air interface of CC1 is 4×30.72, the throughput of the air interface of CC2 is 4×15.36, and D_CC0:D_CC1:D_CC2=4:2:1, with D_CC0 being the throughput of the air interface of CC0, D_CC1 being the throughput of the air interface of CC1, and D_CC2 being the throughput of the air interface of CC2.

Therefore, 4 bytes of service data of CC0, 2 bytes of service data of CC1, and 1 byte of service data of CC2 may be included in the data pattern of one arrangement period; or 8 bytes of service data of CC0, 4 bytes of service data of CC1, and 2 bytes of service data of CC2 may be included in the data pattern of one arrangement period. The rest may be deduced from above, as long as the ratio of amounts of service data of the k CCs included in the data pattern of the arrangement period is the ratio of throughputs of air interfaces of the k CCs.

In some implementations, as shown in FIG. 2, the second data frame includes SOF, Header, PayLoad, CRC, and EOF.

In some implementations, SOF represents a start position of a frame.

In some implementations, Header identifies characteristics of a current frame.

In some implementations, CRC is a CRC bit generated from Header and PayLoad.

In some implementations, EOF represents an end position of a frame.

In some implementations, the payload of the second data frame further includes A padding bytes, with A being an integer greater than or equal to 0.

In some implementations, acquiring the second data frame (i.e., operation 400) includes: performing second physical layer processing on the data received from each activated lane; performing reversed bit width conversion on the data subjected to the second physical layer processing on each activated lane; performing lane alignment on the data subjected to the reversed bit width conversion on all activated lanes; performing symbol boundary search and high-speed serial communication decoding on the data subjected to the lane alignment; and performing lane demapping on the decoded data on all activated lanes, to obtain the second data frame.

In some implementations, the reversed bit width conversion refers to a process of converting a bit width of the data subjected to the second physical layer processing into a bit width for subsequent processing.

In some implementations, a main purpose of the lane alignment is to eliminate the delay jitter between different lanes, which may be caused by different board-level traces.

In some implementations, the high-speed serial communication decoding may include for example, 8B/10B decoding, or 64B/66B decoding, or the like.

In some implementations, the second physical layer processing includes processes such as equalization, clock recovery, receive filtering, serial-to-parallel conversion, and the like.

At operation 401, demodulating the second data frame to obtain the data patterns of N arrangement periods; and caching the data patterns of N arrangement periods obtained by demodulating.

In some implementations, during the second data frame being demodulated to obtain the data patterns of N arrangement periods, a result of CRC check is obtained, and in response to the CRC check failing, alarm information is generated and provided to a local main control CPU for subsequent processing, and in response to the CRC check succeeding, subsequent processing is to be continued.

At operation 402, judging whether a number of cached data patterns of arrangement periods is greater than or equal to a fifth preset threshold; and acquiring the cached data patterns of arrangement periods in response to the number of cached data patterns of arrangement periods is greater than or equal to the fifth preset threshold.

In some implementations, the fifth preset threshold is determined based on a maximum transmission delay that is currently tolerable for a system. For example, the fifth preset threshold is the amount of data that can be transmitted within the maximum transmission delay that is currently tolerable for the system.

In some implementations, the maximum transmission delay that is currently tolerable for the system is less than or equal to a length of one arrangement period.

At operation 403, separating service data of all activated CCs from the acquired data patterns of arrangement periods.

In some implementations, service data of k CCs currently activated may be separated from the data patterns of arrangement periods according to a ratio of amounts of service data of the k CCs currently activated in the data pattern of the arrangement period.

In some implementations, after separating the service data of all activated CCs from the acquired data patterns of arrangement periods, the data processing method further includes: caching the separated service data of all activated CCs, and judging whether the amount of cached service data of each CC is greater than or equal to a sixth preset threshold; and in response to the amount of cached service data of each of all the CCs being greater than or equal to the sixth preset threshold, reading the cached service data of the CCs for subsequent processing.

According to the data processing method provided in the embodiment of the present application, at least part of service data of all component carriers currently activated is included in the data pattern of one arrangement period, and the first data frame is formed based on the data pattern of the arrangement period, so that the delay jitter is limited within one arrangement period, which enables a transmission delay to be controllable and predictable in a case of reconfiguration, addition or deletion of a service, thereby effectively improving the quality and reliability of service transmission.

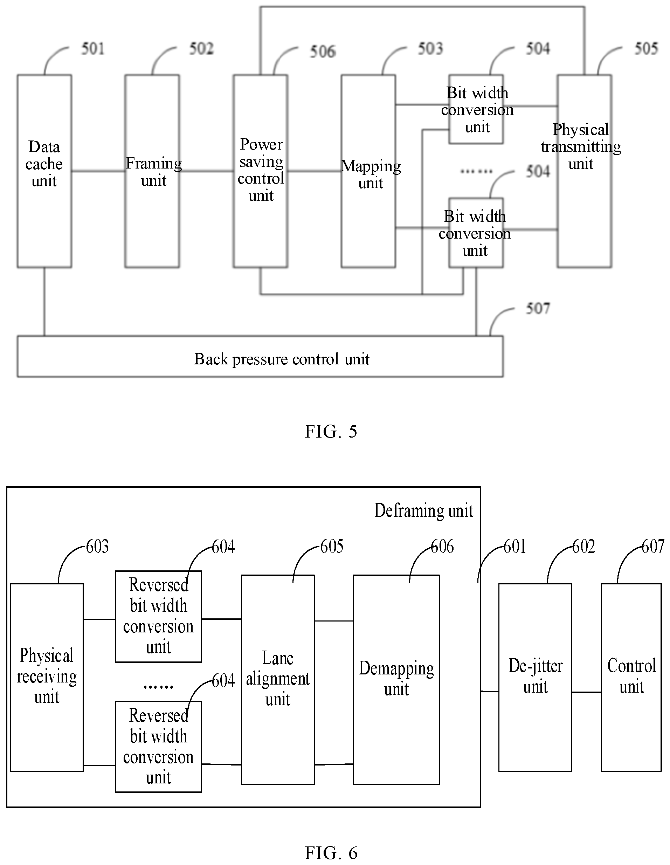

FIG. 5 is a block diagram of a data processing apparatus according to an embodiment of the present application.

In a third aspect, referring to FIG. 5, an embodiment of the present application provides a data processing apparatus, which may be a first interface module in a first chip, the first chip may be any chip for data transmission, such as any chip mentioned above.

The data processing apparatus includes: a data cache unit 501 configured to acquire service data of k CCs currently activated, with k being an integer greater than or equal to 1, form a data pattern of an arrangement period based on the service data of the k CCs currently activated, the data pattern of the arrangement period including at least part of the service data of the k CCs currently activated; and a framing unit 502 configured to form a first data frame based on the data pattern of the arrangement period, a payload of the first data frame including data patterns of N arrangement periods, with N being an integer greater than or equal to 1.

In some implementations, the data cache unit 501 is configured to acquire the service data of the k CCs currently activated, by: receiving service data of all CCs; caching service data of the k CCs currently activated in the service data of all the CCs; and acquiring the service data of the k CCs currently activated from the cached service data.

In some implementations, in response to the first chip being a DBB chip, the data cache unit 501 may receive the service data of all CCs from a modem in the first chip.

In some implementations, the data cache unit 501 may proportionally interleave at least part of the service data of the k CCs currently activated in the data pattern of the arrangement period. As shown in FIG. 3, at least part of the service data of three CCs currently activated, i.e., service data of CC0, CC1 and CC2, is proportionally interleaved in the data pattern of one arrangement period.

In some implementations, a ratio of amounts of service data of the k CCs included in the data pattern of the arrangement period is determined based on throughputs of air interfaces of the k CCs.

In some implementations, in response to any CC transmitting through B antennas, the throughput of the air interface of the CC is B times of a service sampling rate of the CC, with B being an integer greater than or equal to 1.

In some implementations, the ratio of amounts of service data of the k CCs included in the data pattern of the arrangement period is a ratio of throughputs of air interfaces of the k CCs.

For example, three CCs are currently activated, service data of a first CC (i.e., CC0) is transmitted through two antennas with a service sampling rate of 122.88 megahertz (MHz), service data of a second CC (i.e., CC1) is transmitted through four antennas with a service sampling rate of 30.72MHz, and service data of a third CC (i.e., CC2) is transmitted through four antennas with a service sampling rate of 15.36MHz. The service sampling rate of CC0 is 2×122.88, the service sampling rate of CC1 is 4×30.72, the service sampling rate of CC2 is 4×15.36, and D_CC0:D_CC1:D_CC2=4:2:1, with D_CC0 being the service sampling rate of CC0, D_CC1 being the service sampling rate of CC1, and D_CC2 being the service sampling rate of CC2.

Therefore, 4 bytes of service data of CC0, 2 bytes of service data of CC1, and 1 byte of service data of CC2 may be included in the data pattern of one arrangement period; or 8 bytes of service data of CC0, 4 bytes of service data of CC1, and 2 bytes of service data of CC2 may be included in the data pattern of one arrangement period. The rest may be deduced from above, as long as the ratio of amounts of service data of the k CCs included in the data pattern of the arrangement period is the ratio of throughputs of air interfaces of the k CCs.

In some implementations, as shown in FIG. 2, the first data frame includes SOF, Header, PayLoad, CRC, and EOF.

In some implementations, SOF represents a start position of a frame.

In some implementations, Header identifies characteristics of a current frame.

In some implementations, CRC is a CRC bit generated from Header and PayLoad.

In some implementations, EOF represents an end position of a frame.

In some implementations, the payload of the first data frame further includes A padding bytes, with A being an integer greater than or equal to 0.

In some implementations, as shown in FIG. 3, in response to the data patterns of N arrangement periods being not enough to fill the payload of the first data frame, A padding bytes may be added to the payload of the first data frame to complete framing.

In some implementations, the data processing apparatus further includes: a mapping unit 503 configured to map the first data frame to M lanes activated, with M being an integer greater than or equal to 1, and perform high-speed serial communication encoding on the data mapped to each activated lane; a bit width conversion unit 504 configured to perform bit width conversion on the data subjected to the high-speed serial communication encoding on each activated lane; and a physical transmitting unit 505 configured to perform first physical layer processing on the data subjected to the bit width conversion on each activated lane.

In some implementations, a mode of mapping the first data frame to the M lanes activated, and a mode of performing high-speed serial communication encoding on the data mapped to each activated lane by the mapping unit 503 may refer to those in MIPI DigRF v4 interface specification.

In some implementations, the high-speed serial communication encoding may include for example, 8B/10B encoding, or 64B/66B encoding, or 128B/132B encoding, or the like.

In some implementations, each activated lane corresponds to one bit width conversion unit 504.

In some implementations, the bit width conversion refers to a process of converting a bit width of the data subjected to the high-speed serial communication encoding into a bit width expected by the physical transmitting unit 505.

In some implementations, the first physical layer processing includes processes such as parallel-to-serial conversion, transmit filtering, and de-emphasis.

In some implementations, the data processing apparatus further includes: a power saving control unit 506 configured to cache the first data frame, judge whether a number of cached first data frames is less than or equal to a first preset threshold, and in response to the number of cached first data frames being less than or equal to the first preset threshold, stop outputting the cached first data frames to the mapping unit 503.

The bit width conversion unit 504 is further configured to cache the data subjected to the bit width conversion on each activated lane.

The power saving control unit 506 is further configured to judge whether the data, subjected to the bit width conversion, cached on each activated lane is null, and in response to the number of cached first data frames being less than or equal to the first preset threshold, and the data, subjected to the bit width conversion, cached on all activated lanes being null, control the bit width conversion unit 504 to stop outputting the cached data subjected to the bit width conversion to the physical transmitting unit 505, and control the mapping unit 503, the bit width conversion unit 504, and the physical transmitting unit 505 to enter a power saving mode.

In some implementations, the power saving control unit 506 is further configured to, in response to the number of cached first data frames being greater than the first preset threshold, not perform any processing, and continue data processing in the original flow, i.e., continue to output the cached first data frames to the mapping unit 503, so that the mapping unit 503 continues to map the first data frames to the M lanes activated.

In some implementations, the power saving control unit 506 is further configured to, in response to the data, subjected to the bit width conversion, cached on at least one activated lane being not null, not perform any processing, and continue data processing in the original flow, i.e., control the bit width conversion unit 504 to output the cached data subjected to the bit width conversion to the physical transmitting unit 505, and control the mapping unit 503, the bit width conversion unit 504, and the physical transmitting unit 505 to exit the power saving mode.

In some implementations, during determining whether the cached data subjected to the bit width conversion is null, the power saving control unit 506 determines whether the data, subjected to the bit width conversion, cached in all bit width conversion units 504 is null, and in response to the data, subjected to the bit width conversion, cached in all bit width conversion units 504 being null, control the bit width conversion unit 504 to stop outputting the cached data subjected to the bit width conversion to the physical transmitting unit 505, and control the mapping unit 503, the bit width conversion unit 504, and the physical transmitting unit 505 to enter the power saving mode.

In some implementations, the power saving control unit 506 is further configured to judge whether the number of cached first data frames is greater than a second preset threshold, and in response to the number of cached first data frames being greater than the second preset threshold, continue to output the cached first data frames to the mapping unit 503, and control the mapping unit 503, the bit width conversion unit 504, and the physical transmitting unit 505 to exit the power saving mode.

In some implementations, the power saving control unit 506 is further configured to, in response to the number of cached first data frames being less than or equal to the second preset threshold, not perform any processing, and continue data processing in the original flow, i.e., continue to stop outputting the cached first data frames to the mapping unit 503, and control the mapping unit 503, the bit width conversion unit 504, and the physical transmitting unit 505 to continue to be in the power saving mode.

In some implementations, the power saving control unit 506 may control the mapping unit 503, the bit width conversion unit 504, and the physical transmitting unit 505 to enter or exit the power saving mode through a signal stall_en. For example, in response to the signal stall_en being pulled up, the mapping unit 503, the bit width conversion unit 504, and the physical transmitting unit 505 are controlled to enter the power saving mode; and in response to the signal stall_en being pulled down, the mapping unit 503, the bit width conversion unit 504, and the physical transmitting unit 505 are controlled to exit the power saving mode.

In some implementations, the bit width conversion unit 504 is further configured to cache the data subjected to the bit width conversion.

The data processing apparatus further includes a back pressure control unit 507 configured to judge whether an amount of data, subjected to the bit width conversion, cached on each activated lane is greater than a third preset threshold, and in response to the amount of data, subjected to the bit width conversion, cached on each of all activated lanes being larger than the third preset threshold, control the data cache unit 501 to stop outputting the data pattern of the arrangement period to the framing unit 502.

In some implementations, the back pressure control unit 507 is further configured to, in response to the amount of data, subjected to the bit width conversion, cached on at least one activated lane being less than or equal to the third preset threshold, not perform any processing, and continue data processing in the original flow, i.e., control the data cache unit 501 to output the data pattern of the arrangement period to the framing unit 502.

In some implementations, the back pressure control unit 507 is further configured to judge whether an amount of data, subjected to the bit width conversion, cached on each activated lane is less than a fourth preset threshold, and in response to the amount of data, subjected to the bit width conversion, cached on each of all activated lanes being less than the fourth preset threshold, control the data cache unit 501 to continue to output the data pattern of the arrangement period to the framing unit 502.

In some implementations, the back pressure control unit 507 is further configured to, in response to the amount of data, subjected to the bit width conversion, cached on at least one activated lane being greater than or equal to the fourth preset threshold, not perform any processing, and continue data processing in the original flow, i.e., control the data cache unit 501 to stop outputting the data pattern of the arrangement period to the framing unit 502.

In some implementations, the back pressure control unit 507 may control the data cache unit 501 to continue to output the data pattern of the arrangement period to the framing unit 502 or stop outputting the data pattern of the arrangement period to the framing unit 502 through a back pressure signal pdata_en. For example, in response to the back pressure signal pdata_en being pulled down, the back pressure control unit 507 controls the data cache unit 501 to stop outputting the data pattern of the arrangement period to the framing unit 502, in this case, all units between the framing unit 502 and the bit width conversion unit 504 are in a clock gating state due to an absence of driving data; and in response to the back pressure signal pdata_en being pulled up, the back pressure control unit 507 controls the data cache unit 501 to continue to output the data pattern of the arrangement period to the framing unit 502.

In some implementations, in response to the first chip being a DBB chip, M activated lanes at an input of the physical transmitting unit 505 are each connected to one bit width conversion unit 504, and an output is connected to M groups of differential signal pins, corresponding to the M activated lanes, on the DDB chip.

The implementation of the data processing apparatus is the same as that of the data processing method described above, and thus is not repeated here.

FIG. 6 is a block diagram of a data processing apparatus according to an embodiment of the present application.

In a fourth aspect, referring to FIG. 6, an embodiment of the present application provides a data processing apparatus, which may be a second interface module in a second chip, and the first chip may be any chip for data transmission, such as any chip mentioned above.

The data processing apparatus includes: a deframing unit 601 configured to acquire a second data frame, a payload of the second data frame including data patterns of N arrangement periods, with N being an integer greater than or equal to 1, and demodulate the second data frame to obtain the data patterns of N arrangement periods; and a de-jitter unit 602 configured to cache the data patterns of N arrangement periods obtained by demodulating, judge whether a number of cached data patterns of arrangement periods is greater than or equal to a fifth preset threshold, acquire the cached data patterns of arrangement periods in response to the number of cached data patterns of arrangement periods being greater than or equal to the fifth preset threshold, and separate service data of all activated CCs from the acquired data patterns of arrangement periods.

In some implementations, a ratio of amounts of service data of k component carriers included in the data pattern of the arrangement period is determined based on throughputs of air interfaces of the k component carriers.

In some implementations, in response to any CC transmitting through B antennas, the throughput of the air interface of the CC is B times of a service sampling rate of the CC, with B being an integer greater than or equal to 1.

In some implementations, the ratio of amounts of service data of the k component carriers included in the data pattern of the arrangement period is a ratio of throughputs of air interfaces of the k component carriers.

For example, three CCs are currently activated, service data of a first CC (i.e., CC0) is transmitted through two antennas with a service sampling rate of 122.88 megahertz (MHz), service data of a second CC (i.e., CC1) is transmitted through four antennas with a service sampling rate of 30.72MHz, and service data of a third CC (i.e., CC2) is transmitted through four antennas with a service sampling rate of 15.36MHz. The throughput of the air interface of CC0 is 2×122.88, the throughput of the air interface of CC1 is 4×30.72, the throughput of the air interface of CC2 is 4×15.36, and D_CC0:D_CC1:D_CC2=4:2:1, with D_CC0 being the throughput of the air interface of CC0, D_CC1 being the throughput of the air interface of CC1, and D_CC2 being the throughput of the air interface of CC2.

Therefore, 4 bytes of service data of CC0, 2 bytes of service data of CC1, and 1 byte of service data of CC2 may be included in the data pattern of one arrangement period; or 8 bytes of service data of CC0, 4 bytes of service data of CC1, and 2 bytes of service data of CC2 may be included in the data pattern of one arrangement period. The rest may be deduced from above, as long as the ratio of amounts of service data of the k CCs included in the data pattern of the arrangement period is the ratio of throughputs of air interfaces of the k CCs.

In some implementations, as shown in FIG. 2, the second data frame includes SOF, Header, PayLoad, CRC, and EOF.

In some implementations, SOF represents a start position of a frame.

In some implementations, Header identifies characteristics of a current frame.

In some implementations, CRC is a CRC bit generated from Header and PayLoad.

In some implementations, EOF represents an end position of a frame.

In some implementations, the payload of the second data frame further includes A padding bytes, with A being an integer greater than or equal to 0.

In some implementations, the fifth preset threshold is determined based on a maximum transmission delay that is currently tolerable for a system. For example, the fifth preset threshold is the amount of data that can be transmitted within the maximum transmission delay that is currently tolerable for the system.

In some implementations, the maximum transmission delay that is currently tolerable for the system is less than or equal to a length of one arrangement period.

In some implementations, the de-jitter unit 602 may separate service data of k CCs currently activated from the data pattern of the arrangement period according to a ratio of amounts of service data of the k CCs currently activated in the data pattern of the arrangement period.

In some implementations, during demodulating the second data frame to obtain the data patterns of N arrangement periods, the deframing unit 601 further obtains a result of CRC check, and in response to the CRC check failing, alarm information is generated and provided to a local main control CPU for subsequent processing, and in response to the CRC check succeeding, the data patterns of N arrangement periods are output to the de-jitter unit 602 for subsequent processing.

In some implementations, the deframing unit 601 further includes: a physical receiving unit 603 configured to perform second physical layer processing on the data received from each activated lane; a reversed bit width conversion unit 604 configured to perform reversed bit width conversion on the data subjected to the second physical layer processing; a lane alignment unit 605 configured to perform lane alignment on the data subjected to the reversed bit width conversion on all activated lanes, and perform symbol boundary search and high-speed serial communication decoding on the data subjected to the lane alignment; and a demapping unit 606 configured to perform lane demapping on the decoded data on all the activated lanes, to obtain the second data frame.

In some implementations, in response to the second chip being an RF chip, an input of the physical receiving unit 603 is connected to M groups of differential signal pins, corresponding to M activated lanes, on the RF chip, and M activated lanes at an output are each connected to one reversed bit width conversion unit 604.

In some implementations, each activated lane corresponds to one reversed bit width conversion unit 604.

In some implementations, the reversed bit width conversion refers to a process of converting a bit width of the data, subjected to the second physical layer processing, output from the physical receiving unit 603 into a bit width expected by the lane alignment unit 605.

In some implementations, a main purpose of the lane alignment performed by the lane alignment unit 605 is to eliminate the delay jitter between different lanes, which may be caused by different board-level traces.

In some implementations, the high-speed serial communication decoding may include for example, 8B/10B decoding, or 64B/66B decoding, or 128B/132B decoding, or the like.

In some implementations, the second physical layer processing includes processes such as equalization, clock recovery, receive filtering, serial-to-parallel conversion, and the like.

In some implementations, the data processing apparatus further includes a control unit 607 configured to cache service data of all separated CCs activated, and judge whether the amount of cached service data of each CC is greater than or equal to a sixth preset threshold, and in response to the amount of cached service data of each of all the CCs being greater than or equal to the sixth preset threshold, notify following units to read the cached service data of the CCs for subsequent processing.

The implementation of the data processing apparatus is the same as that of the data processing method described above, and thus is not repeated here.

In a fifth aspect, an embodiment of the present application provides a communication device, including: at least one of the data processing apparatus of the third aspect or the data processing apparatus of the fourth aspect.

In a sixth aspect, an embodiment of the present application provides a computer-readable storage medium having a computer program stored thereon, the computer program, when executed by a processor, causes the processor to perform the data processing method as described above.

Those of ordinary skill in the art will appreciate that all or some operations of the method described above, function modules/units in the system and/or apparatus may be implemented as software, firmware, hardware, and suitable combinations thereof. In a hardware implementation, the division between the function modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer readable medium which may include a computer storage medium (or non-transitory medium) and a communication medium (or transitory medium). As is well known to those of ordinary skill in the art, the term computer storage medium includes volatile and nonvolatile, removable and non-removable media implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic memory, or may be any other medium used for storing the desired information and accessible by a computer. Moreover, it is well known to those of ordinary skill in the art that a communication medium typically includes a computer-readable instruction, a data structure, a program module, or other data in a modulated data signal, such as a carrier wave or other transport mechanism, and may include any information delivery medium.

The present disclosure has disclosed exemplary implementations, and although specific terms are employed, they are used and should be interpreted in a generic and descriptive sense only and not for purposes of limitation. In some instances, features, characteristics and/or elements described in connection with a particular implementation may be used alone, or may be used in combination with features, characteristics and/or elements described in connection with other implementations, unless expressly stated otherwise, as would be apparent to one skilled in the art. It will, therefore, be understood by those skilled in the art that various changes in form and details may be made without departing from the scope of the present application as set forth in the appended claims.

## Claims

1. A data processing method, comprising:
acquiring service data of k component carriers currently activated, with k being an integer greater than or equal to 1;
forming a data pattern of an arrangement period based on the service data of the k component carriers currently activated, wherein the data pattern of the arrangement period comprises at least part of the service data of the k component carriers currently activated; and
forming a first data frame based on the data pattern of the arrangement period, wherein a payload of the first data frame comprising data patterns of N arrangement periods, with N being an integer greater than or equal to 1.

2. The data processing method according to claim 1, wherein a ratio of amounts of service data of the k component carriers comprised in the data pattern of the arrangement period is determined based on throughputs of air interfaces of the k component carriers.

3. The data processing method according to claim 2, wherein the ratio of amounts of service data of the k component carriers comprised in the data pattern of the arrangement period is a ratio of throughputs of air interfaces of the k component carriers.

4. The data processing method according to claim 1, wherein the payload of the first data frame further comprises A padding bytes, with A being an integer greater than or equal to 0.

5. A data processing method, comprising:
acquiring a second data frame, wherein a payload of the second data frame comprises data patterns of N arrangement periods, with N being an integer greater than or equal to 1;
demodulating the second data frame to obtain the data patterns of N arrangement periods, and caching the data patterns of N arrangement periods obtained by demodulating;
judging whether a number of cached data patterns of arrangement periods is greater than or equal to a fifth preset threshold, and acquiring the cached data patterns of arrangement periods in response to the number of cached data patterns of arrangement periods being greater than or equal to the fifth preset threshold; and
separating service data of all activated component carriers from the acquired data patterns of arrangement periods.

6. The data processing method according to claim 5, wherein a ratio of amounts of service data of the k component carriers comprised in the data pattern of the arrangement period is determined based on throughputs of air interfaces of the k component carriers.

7. The data processing method according to claim 6, wherein the ratio of amounts of service data of the k component carriers comprised in the data pattern of the arrangement period is a ratio of throughputs of air interfaces of the k component carriers.

8. The data processing method according to claim 5, wherein the payload of the second data frame further comprises A padding bytes, with A being an integer greater than or equal to 0.

9. The data processing method according to any one of claims 5 to 8, wherein the fifth preset threshold is determined based on a maximum transmission delay that is currently tolerable for a system.

10. The data processing method according to any one of claims 5 to 8, wherein acquiring the second data frame comprises:
performing second physical layer processing on the data received from each activated lane, and performing reversed bit width conversion on the data, subjected to the second physical layer processing, on each activated lane;
performing lane alignment on the data subjected to the reversed bit width conversion on all activated lane, and performing symbol boundary search and high-speed serial communication decoding on the data subjected to the lane alignment; and
performing lane demapping on the decoded data on all the activated lanes, to obtain the second data frame.

11. A data processing apparatus, comprising:
a data cache unit configured to acquire service data of k component carriers currently activated, with k being an integer greater than or equal to 1, form a data pattern of an arrangement period based on the service data of the k component carriers currently activated, wherein the data pattern of the arrangement period comprises at least part of the service data of the k component carriers currently activated; and
a framing unit configured to form a first data frame based on the data pattern of the arrangement period, wherein a payload of the first data frame comprises data patterns of N arrangement periods, with N being an integer greater than or equal to 1.

12. A data processing apparatus, comprising:
a deframing unit configured to acquire a second data frame, a payload of the second data frame comprising data patterns of N arrangement periods, with N being an integer greater than or equal to 1, and demodulate the second data frame to obtain the data patterns of N arrangement periods; and
a de-jitter unit configured to cache the data patterns of N arrangement periods obtained by demodulating, judge whether a number of cached data patterns of arrangement periods is greater than or equal to a fifth preset threshold, acquire the cached data patterns of arrangement periods in response to the number of cached data patterns of arrangement periods being greater than or equal to the fifth preset threshold, and separate service data of all activated component carriers from the acquired data patterns of arrangement periods.

13. A communication device, comprising: at least one of the data processing apparatus of claim 11 or the data processing apparatus of claim 12.

14. A computer-readable storage medium having a computer program stored thereon, the computer program, when executed by a processor, causes the processor to implement the data processing method according to any one of claims 1 to 10.
